# EUROPÄISCHE PATENTSCHRIFT

(11) **EP 0 706 863 B1**
(45) Veröffentlichungstag und Bekanntmachung des Hinweises auf die Patenterteilung: **29.11.2000**
(21) Anmeldenummer: 95117036.4
(22) Anmeldetag: 23.03.1993
(51) Int. Cl.: B26D 1/62, B26D 7/10, B32B 31/00

(54) **Verfahren und Vorrichtung zur Trennung von kaschierten Laminaten**
Method and apparatus for separating laminated products
Procédé et dispositif pour la séparation de produits stratifiés

(30) Priorität: 24.03.1992 CH 92492; 05.02.1993 CH 35393
(43) Veröffentlichungstag der Anmeldung: 17.04.1996
(62) Teilanmeldung aus: 93905142.1
(73) Patentinhaber: Ulrich Steinemann AG Maschinenfabrik, CH-9015 St. Gallen (CH)
(72) Erfinder: Achilles, Gerhard, D-67434 Neustadt (DE); Perberschlager, Alois, CH-8008 Zürich (CH); Messmer, Emil, CH-8712 Stäfa (CH); Sturzenegger, Ernst, CH-9202 Gossau (CH); Zumstein, Bruno, CH-9015 St. Gallen (CH)
(74) Vertreter: Ackermann, Ernst

(56) Entgegenhaltungen:
- EP-A- 0 035 462
- EP-A- 0 142 312
- EP-A- 0 157 261
- EP-A- 0 235 790
- DE-C- 502 976
- DE-U- 8 706 297
- FR-A- 2 615 448
- GB-A- 1 125 539
- US-A- 4 158 712
- US-A- 4 279 183
- US-A- 4 341 334

## Beschreibung

### Technisches Gebiet

Die Erfindung betrifft ein Verfahren sowie eine Vorrichtung zum Trennen eines kaschierten Laminates, bestehend aus einer bahnförmigen Folie und Einzelbogen, wobei das Laminat kontinuierlich an einer Schneidstation vorbeigeführt und für den Folienschnitt abgestützt wird, und ein Schneidmesser mit rotierender Bewegung auf das Laminat zu- und weg von der Bewegungsbahn des Laminates bewegt und für den Schnitt mit etwa gleicher Geschwindigkeit mit dem Laminat geführt und lediglich die Folie durchgeschnitten wird. Derartige Laminate werden insbesondere in den Werbemedien oder in der Verpackungsindustrie eingesetzt.

### Stand der Technik

Die relativ dünne Folie aus Kunststoffmaterial wird von einer Rolle endlos abgenommen. Im Falle von Einzelbögen werden die Bögen von einem Stapel entnommen. Beide zusammen werden als Laminat dem Kaschierwerk zugeführt. Um eine Verschmutzung der Walzen im Kaschierwerk zu verhindern, überlappt man häufig die einzelnen aufeinanderfolgenden Bogen im Randbereich. Sie werden über- oder unterschuppt mit der Folie überzogen. Aber auch ein Kaschieren der einzelnen Bogen Stoss an Stoss ist denkbar. Nach dem Kaschieren sind die Einzelbögen durch die Folie miteinander verbunden. Vor der Weiterverarbeitung in einem nachgeschalteten Arbeitsprozess muss das Laminat wiederum zu einzelnen Laminatbogen vereinzelt werden.

Die DE-A-2 817 917 zeigt eine bekannte Lösung für die Anwendung von strahlen-härtbaren, sogenannten UV-Klebern. Diese Lösung brachte einen grossen Fortschritt gegenüber den konventionellen Lösungen bei denen teils mit IR-Strahlen und Warmluft über relativ lange Zeit der Kleber angetrocknet werden musste. Die Austrocknung des Laminates beträgt teils bis zu 24 Stunden bevor eine Weiterverarbeitung möglich wird. Die Verarbeitungsgeschwindigkeit der bekannten Anlagen bei konventionellen Klebern muss unterhalb von zum Beispiel 40 Metern pro Minute liegen, da sonst eine erhebliche Zunahme von Betriebsstörungen auftreten. 60 Meter pro Minute wurde bisher gleichsam als "Verarbeitungs-Schallgrenze" angenommen.

Bei der Anwendung von UV- oder zum Beispiel ESH-polimerisierbaren, beziehungsweise härtbaren Klebern muss nicht im eigentlichen Sinne der Kleber getrocknet sondern viel mehr gehärtet werden, was nur eine Zeitspanne von Bruchteilen einer Sekunde in Anspruch nimmt. Unmittelbar nach der Härtung können die UV-kaschierten Bögen ohne Qualitätsverlust auf einen Stapel aufgeschichtet oder auf Rollen gelagert werden. Dies ist für eine kontinuierliche Verfahrensweise eine Voraussetzung. An die Kaschierung, die an sich eine Veredelung des Trägermateriales darstellt, werden je nach der Endbestimmung ganz verschiedene Anforderungen gestellt.

Bei einer ersten Kategorie dient die Kaschierung vor allem der Erhöhung der mechanischen Festigkeit sowie zum Schutz der Oberfläche des bedruckten Trägermateriales, welches hier aus bedrucktem Papier oder Karton bestehen kann. Daraus werden zum Beispiel Buchhüllen, Imagemappen, Plakate usw. hergestellt.

Bei der Lösung gemäss DE-A-28 17 917 wird von bahnförmigem Material bzw. einer Druckträgerbahn ausgegangen. Nach der Herstellung des Verbundes der Druckträgerbahn sowie der Folie folgt eine UV-Bestrahlung für das Verkleben des Verbundes. Danach können über eine Schneidvorrichtung von dem Verbund von Trägerbahn und Folie Stücke geschnitten werden.

Die GB-A-1 125 539 zeigt ein Verfahren und eine Vorrichtung zum Kaschieren von Einzelbögen mit einer Folie und Trennen des Laminates nach der Kaschierung. Dabei wird das Laminat kontinuierlich an einer Schneidstation vorbeigeführt und für den Folienschnitt abgestützt. Ein Schneidmesser wird mit rotierender Bewegung auf das Laminat zu- und weg von der Bewegungsbahn des Laminates bewegt. Für den Schnitt wird das Schneidmesser mit etwa gleicher Geschwindigkeit mit dem Laminat geführt und lediglich die Folie durchgeschnitten. Für den Schneidvorgang bewegt sich das Schneidmesser synchron mit dem Laminat. Als bevorzugte Lösung wird vorgeschlagen, dass der Umfang des rotierenden Schneidmessers etwa gleich ist, wie die Länge eines Einzelbogens. Damit entsteht ein Gleichlauf von Schneidmesser und durchlaufendem Bogen. Eine frei wählbare Bogenfolge ist dadurch nicht direkt realisierbar. Für das Kaschieren werden die einzelnen Bögen leicht überlappt, zusammen mit der Folie den Einzugsspalt einer Gummiwalze sowie einer Kühlwalze gelenkt, um die Kühlwalze herum und nach unten nach etwa 180° Umlauf um die Kühlrolle von einer Saugwalze abgezogen und wieder in einer horizontalen Ebene einer Schneideinrichtung zugeführt. Durch die relativ starken Umlenkungen entstehen Kräfte, die eine ungünstige Voraussetzung sind für höhere qualitative Ansprüche an das Endprodukt.

Die US-A-4 279 183 schlägt eine Schneidstation für Gewebe oder Netze vor, um aus bahnförmigem Material Stücke von kurzer Länge für die Herstellung von Taschen zu produzieren. Ein rotierendes Heizelement wird auf eine Geschwindigkeit des bahnförmigen Materials gebracht und erzeugt an der Kontaktlinie ein Durchschmelzen bzw. ein Durchschneiden. Das vorlaufende bereits geschnittene Netz wird abgezogen und der nachlaufende Bahnteil über eine Führung einer Spannrolle zugeführt, so dass der Schneidprozess zyklisch wiederholbar ist. Da das ganze Gewebe vollständig durchtrennt werden muss, wird das bahnförmige Material mit dem Schneidmesser ohne Abstützung um ein beachtliches Mass durchgedrückt. Die dabei erforderlichen Spannkräfte in der Gewebebahn würden den Einsatz z.B. bei strahlenhärtbaren Laminaten verunmöglichen, da durch die zwingend entstehenden Zugkräfte der Verbund belastet und das Endprodukt qualitativ negativ beeinflusst würde.

### Darstellung der Erfindung

Der Erfindung wurde die Aufgabe gestellt, Verfahren, Vorrichtung zum Trennen von Laminaten zu verbessern, insbesondere in Bezug auf die Betriebssicherheit und für die Qualität des Endproduktes auch bei höchsten Verarbeitungsgeschwindigkeiten, so dass zum Beispiel strahlen-härtbare Laminate auch für höchste Ansprüche im Sinne von "Kunstkaschierung" herstellbar sind.

Eine weitere Teilaufgabe lag darin, Verfahren und Vorrichtung zu verbessern, mit dem Ziel einer möglichst fehlerfreien Laminatherstellung für Einzelbögen und Endlosbogen ganz besonders auch bei hoher Verarbeitungsgeschwindigkeit. Ferner sollte die Herstellung einer frei wählbaren Bogenfolge für die höchsten Geschwindigkeiten ohne Schäden an dem Bogen zum Beispiel durch die Ausrichtstation möglich sein.

Die erfindungsgemässe Lösung ist gekennzeichnet durch die kennzeichnenden Merkmale der Ansprüche 1 und 10. Besonders vorteilhafte Ausgestaltungen sind gekennzeichnet durch die Ansprüche 2 bis 9 sowie 11 bis 17.

In der Fachwelt hatten sich in den letzten Jahren bereits Stimmen breit gemacht, die das UV-Laminieren für höchste Anforderungen trotz der enormen produktionstechnischen Vorteile als ungenügend verwarfen, da alle entsprechenden Erfahrungen darauf hinzuweisen schienen. Völlig überraschend für die Erfinder war letzten Endes das Resultat, welches auf Grund der Erkenntnis gewonnen werden konnte, dass für höchste Verarbeitungsgeschwindigkeiten besonders in Bezug auf die physikalischen Gesetze, gerade die UV-Kaschierungen bis dahin unzweckmässig angegangen wurden. Der erste grundsätzliche Fehlansatz lag darin, dass man die UV-Kaschierung in Analogie zu den verbreiteten Klebpapieren zu handhaben versuchte. Die Erfahrung besagt bei der klassischen Klebung, dass nach der Benetzung der Klebeschicht und Aufbringen des Klebschichtträgers auf einen anderen Gegenstand, zum Beispiel beim zukleben eines Briefumschlages, die Klebeverbindung sofort wirkt, im Sinne eines "Sekundenleims", und bei einer Trennung der Klebeschicht, schon kurz danach, die Gefahr der Oberflächenbeschädigung besteht. Es wurde ganz offensichtlich übersehen, dass strahlen-härtbare Kleber wie UV-Kleber diesbezüglich ein völlig anderes Verhalten haben. Die UV-Klebung entsteht nämlich nicht dadurch, dass das Netzmittel des Klebers sofort in den Trägerstoff eindringt und durch die damit bedingte Trocknung eine Klebewirkung erzeugt, sondern dadurch, dass man die Wirkung der UV-Strahlen zur Härtung des Klebestoffes ausnutzt. Die strahlen-härtbaren Kleber sind gerade nicht Leimstoffe im klassischen Sinne (welche sofort die Gedankenassoziation mit Klebrigkeit hervorrufen) sondern haben vor der Härtung eine eigenartige eher ölige Wirkung, vergleichbar etwa mit Schmieröl. Legt man eine dünne Glasscheibe auf eine ebene Fläche, mit einer feinen Schmierölschicht dazwischen, so kann nämlich das Glas fast ohne Krafteinwirkung parallel zur Fläche verschoben werden.

Diese Erkenntnis machte es möglich, an einen Kernpunkt der neuen Lösung zu kommen, respektive den Grund vieler Fehlschläge in der Vergangenheit zu begreifen. Der Hauptfehler lag darin, dass die UV-Kaschierung mit der bisher üblichen Praxis der Kalandrierung durchgeführt wurde. Gerade bei der "Hochglanz-Kaschierung" hat die Folie vorwiegend eine optische Funktion und soll deshalb so glatt wie möglich sein. Ein Kalanderwalzenpaar ist dafür bekannt, dass es das Gut von den Kalander-Drücken ausgehenden Haft- und Reibkräfte mit grossen Kräften einzieht. Bei der konventionellen Kaschierung wird der Einzugs-Effekt beziehungsweise die entsprechenden grossen Einzugskräfte benötigt, damit einmal der zähe, "klebrige" Kleber auf die rauhe Oberfläche des Bogens gewalzt wird besonders aber auch um das Laminat von der Rohfolienrolle abzuziehen und durch die Beleimung zu ziehen. Im Gegensatz dazu soll gemäss der neuen Lösung die Folie mit dem aufgetragenen strahlen-härtbaren Kleber auf den Bogen- wie zuvor das Glas auf der Fläche mit Schmieröl dazwischen - "schwimmend" aufgebracht werden. Im Falle der Kalandrierung eines UV-Laminates wirkten zwangsnotwendig zu hohe Verschiebekräfte zwischen Folie und Bogen. Es traten deshalb u.a. Verschiebungen, Verspannungen. Schlieren und ungleich verbundene Partien auf. Dies war der Grund von fast allen "Schönheitsfehlern" bei der bisherigen Kaschierung mit strahlen-härtbaren Klebern. Wurde dagegen die Bedingung der Schubkraftfreiheit sowie die geringst mögliche Zugkraft auf das Laminat erfüllt, konnten zur Überraschung aller Beteiligten fehlerfreie Produkte mit bisher nicht erreichbar Qualität hergestellt werden.

Für die Wiederherstellung von Einzelbögen wird die Folie unmittelbar nach der Kaschierwalzung in nassem Zustand geschnitten. Sehr gute Resultate konnten dadurch erzielt werden, dass die Folie durch ein rotierendes thermisches Schneidmesser, das sich über die ganze Breite des Laminates erstreckt, geschnitten wird.

Die unverarbeiteten Bogen werden auf der einen Endseite einer Anlage gelagert, im wesentlichen horizontal über die Verfahrensstrasse zu der anderen Endseite der Anlage geführt und die Folienbeleimung und Zuführung oberhalb der Verfahrensstrasse angeordnet. Die Zuführung der Folie erfolgt von oben nach unten auf die Bogen derart, dass Folie und Bogen zugfrei und mit der Umlaufgeschwindigkeit der beiden Kaschierwalzen zugeführt werden.

Die Vorrichtung beziehungsweise Anlage weist ein Kaschierwerk mit Folienwalze und Bogenwalze, ferner eine Bogen- und Folienzuführung auf, wobei sowohl die Folienwalze wie die Bogenwalze steuer- und oder regelbare Antreibsmittel aufweist, welche für eine im wesentlichen identische Führungsgeschwindigkeit für Folie und Bogen und die Folienzuführung als Folienzugkraft regelbares Folienführwerk ausgebildet ist. Besonders bevorzugt wird die Folienwalze als Regelleitwalze ausgebildet, von welcher aus die Hauptfunktionen der ganzen Anlage koordiniert werden. Es wird dafür von einem Inkrementalgeber der Folienwalze beziehungsweise des Antriebssystems der Folienwalze ausgegangen, der einen Basissteuerparameter für alle Zuführdienste abgibt.

Eine weitere Ausgestaltung der Erfindung ist, dass das effektive Verarbeitungstempo festgestellt über Rechnermittel die Sequenz der Anlegerleistung ermittelt und die Bogenfolge über gesteuerte mechanische Mittel erzeugt wird.

Gemäss einem weiteren vorteilhaften Ausgestaltungsgedanken der Erfindung zum Trennen eines Laminates bestehend aus einer bahnförmigen mit Kleber beschichteten Folie und aus durch die beschichtete Folie miteinander verbundenem Einzelbogen wird das Laminat von einem Kaschierwerk kontinuierlich an eine Schneidstation vorbeigeführt. Dabei wird die Schneidstation zwischen dem Kaschierwerk und einer anschliessenden Laminatverfestigungsstation angeordnet und die Folie, mit einem thermischen Schneidmesser nass geschnitten. Das Schneidwerk wird für den Schnitt mit etwa gleicher Geschwindigkeit mit dem Laminat geführt und auf das Laminat zu und weg bewegt. Es konnten auch bei extrem hoher Schneidkadenz saubere Schnitte dadurch erreicht werden, dass das Laminat für den Folienschnitt über eine nachgibige Auflage, vorzugsweise über ein am Anfang und am Ende des Schneidbereiches aufliegende und mit gleicher Geschwindigkeit wie das Laminat mitlaufendes Endlosband, abgestützt wird. Das Endlosband kann als Saugband ausgebildet werden, so dass das Laminat über den Schneidbereich durch die Saughaftung durchgezogen wird. Das Schneidwerk wird als kreisendes Messerwerk ausgebildet, wobei eine Regelung der Umlaufgeschwindigkeit über Rechnermittel erfolgt, derart, dass für jeden Schnitt das Messerwerk als ein Schneidzyklus auf die Geschwindigkeit des Laminates beschleunigt, während dem Schnitt mit dem Laminat etwa mit gleicher Geschwindigkeit mitbewegt und danach auf eine tieferen Geschwindigkeit verzögert wird. Ganz besonders zweckmässig ist es, wenn in dem Bereich der tieferen Geschwindigkeit das Messwerk einen 0-Punkt beziehungsweise Eichpunkt zur Bewegungskontrolle durchfährt als Ausgangspunkt für die Errechnung des nächsten Zyklus. Das Messerwerk weist nur ein thermisches Schneidmesser auf. Jeder Schneidzyklus kann einer vollen Umdrehung des Messerwerkes entsprechen. Die O-Position wird dazu im oberen Bewegungsviertel des Drehkreises gewählt.

In der Folge wird nun auf die vorrichtungsgemässe Ausgestaltung Bezug genommen. Eine Vorrichtung zur Herstellung von Laminaten, besteht aus einer dünnen Folie sowie Einzel- oder Endlosbogen und weist ein Kaschierwerk mit Folienwalze und Bogenwalze, ferner eine Bogen- und Folienzuführung auf, wobei sowohl die Folienwalze wie die Bogenwalze Antriebsmittel aufweisen, denen eine Regeleinrichtung zugeordnet ist, für eine im wesentlichen identische Führungsgeschwindigkeit für Folie und Bogen, wobei die Folienzuführung bevorzugt als Folienzugkraft regelbares Folienführwerk ausgebildet ist. Gemäss einer weiteren vorteilhaften Ausgestaltung ist die Folienwalze als Steuerleitwalze ausgebildet, von welcher aus üben u.a. einen entsprechenden Inkrementalgeber die Kleberauftragung und/oder eine Schneidstation und/oder eine Bogenschuppstation steuer- oder regelbar ist.

Das Laminat wird von einem Kaschierwerk kontinuierlich an der Schneidstation vorbeigeführt. Die Schneidstation weist ein mit der Geschwindigkeit des Laminates mitbewegbares Schneidmesser sowie Rechnermittel und einen Drehzahlregel-Antrieb des Schneidwerkes auf, welches als thermisches Schneidmesser mit kreisendem Messerwerk ausgebildet ist und vorzugsweise in einem oberen Verzögerungs- oder Ruhebereich einen 0-Positions-Sensor aufweist.

Die effektive Schneidbahn bzw. Kreislinie (101) des Schneidmessers (10) kann um ein geringes Mass tiefer sein, gegenüber der ungestörten Bewegungsbahn des Laminates (8), sodaß das Laminat (8) während dem Schnitt entsprechend in die Bewegungsbahn gedrückt wird, und die Folientrennung durch die Wärmewirkung sowie eine geringe mechanische Schneidkraft erfolgt.

Über Rechnermittel (C2) sind die Verarbeitungsgeschwindigkeit sowie die Bogenlänge frei eingebbar. Das Schneidmesser wird (10) aufgrund des effektiven Verarbeitungstempos und in Abhängigkeit der Bogenlänge (L) gesteuert/geregelt, wobei vorzugsweise die je momentane Verarbeitungsgeschwindigkeit über einen Hauptantrieb festgestellt und die übrigen Funktionen entsprechend koordiniert werden.

### Kurze Beschreibung der Erfindung

Es zeigen:

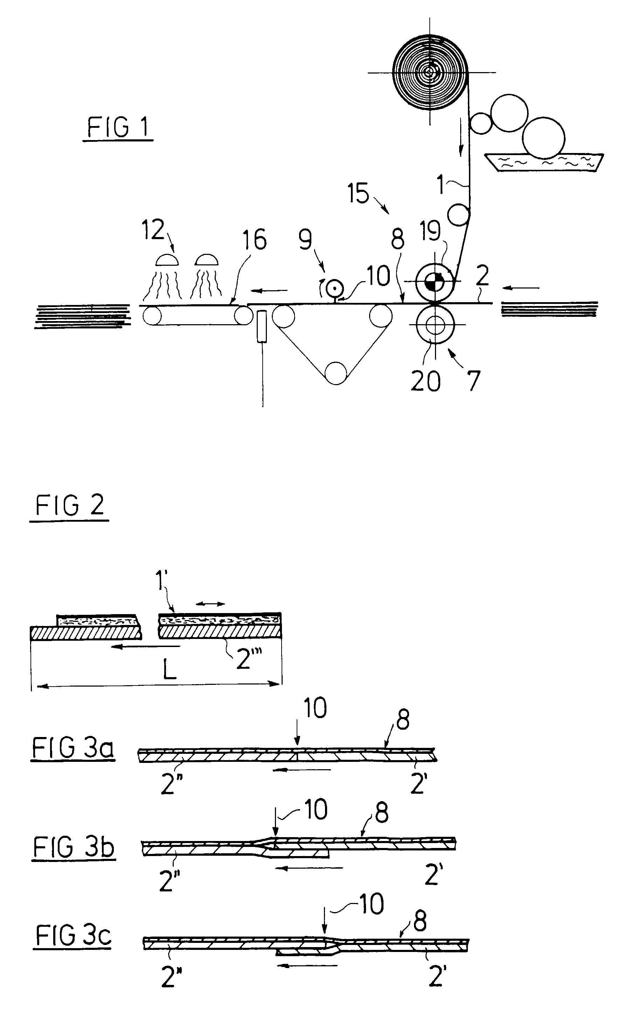

- die Figur 1: schematisch eine Laminieranlage;
- die Figur 2: ein Laminatbogen mit Bogenlänge L;
- die Figur 3a: eine Stoss an Stoss Bogenfolge;
- die Figur 3b: die an sich bekannte Überschuppung;
- die Figur 3c: die an sich bekannte Unterschuppung;

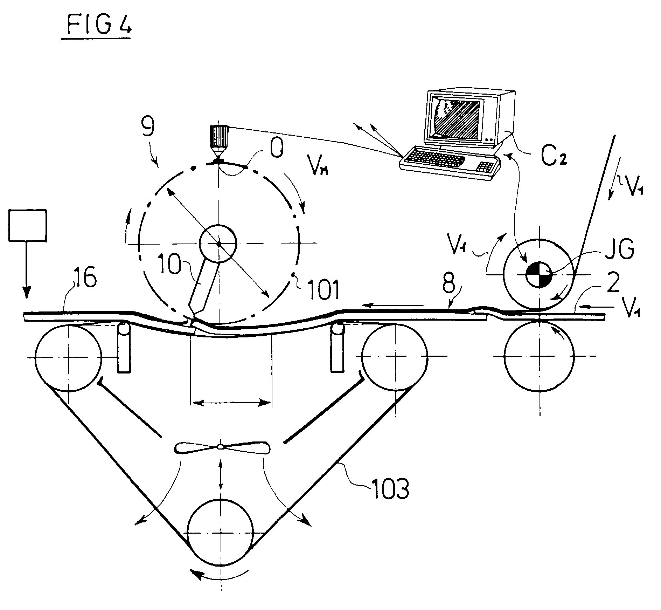

- die Figur 4: schematisch eine Schneidstation;

## Patentansprüche

1. Verfahren zum Trennen eines kaschierten Laminates (8), bestehend aus einer bahnförmigen Folie (1) und Einzelbogen (2, 2', 2"), wobei das Laminat kontinuierlich an einer Schneidstation (9) vorbeigeführt und für den Folienschnitt abgestützt wird, und ein Schneidmesser (10) mit rotierender Bewegung auf das Laminat zu- und weg von der Bewegungsbahn des Laminates (8) bewegt und für den Schnitt mit etwa gleicher Geschwindigkeit mit dem Laminat (8) geführt und lediglich die Folie durchgeschnitten wird,
gekennzeichnet durch die Merkmale:
a) die unverarbeiteten Bogen (2) werden auf der einen Endseite einer Anlage gelagert, im wesentlichen horizontal über die Verfahrensstrasse zu der anderen Endseite der Anlage geführt
b) wobei die Folie nassgetrennt wird und die Folientrennung durch Wärmewirkung eines thermischen Schneidmessers (10) erfolgt und
c) die Umlaufgeschwindigkeit des Schneidmessers (10) über Rechnermittel gesteuert und für jeden Schnitt das Messerwerk als einen Schneidzyklus, auf die Geschwindigkeit des Laminates (8) beschleunigt wird.

2. Verfahren nach Anspruch 1,
**dadurch gekennzeichnet**,
dass der Geschwindigkeitsverlauf des Schneidmessers (10) insbesondere für den Schnitt entsprechend der Anlagegeschwindigkeit und in Übereinstimmung mit der Bogenlänge (L) gesteuert wird.

3. Verfahren nach Anspruch 1 oder 2,
**dadurch gekennzeichnet**,
dass die effektive Schneidbahn bzw. Kreislinie (101) des Schneidmessers (10) um ein geringes Mass tiefer ist, gegenüber der ungestörten Bewegungsbahn des Laminates (8), und das Laminat (8) während dem Schnitt entsprechend in die Bewegungsbahn gedrückt wird, und die Folientrennung durch die Wärmewirkung sowie eine geringe mechanische Schneidkraft erfolgt.

4. Verfahren nach einem der Ansprüche 1 bis 3,
**dadurch gekennzeichnet**,
dass unter dem Messerwerk ein Stützband (103) für das Laminat (8) angeordnet ist, das mit dem Laminat (8) etwa mit gleicher Geschwindigkit mitbewegt wird.

5. Verfahren nach einem der Ansprüche 1 bis 4,
**dadurch gekennzeichnet**,
dass die Folie (1) vor einer Laminatverfestigung nass geschnitten und die Laminatabschnitte (16) getrennt werden.

6. Verfahren nach einem der Ansprüche 1 bis 5,
**dadurch gekennzeichnet**,
dass das Schneidmesser (10) für den Schnitt eine rotierende Bewegung gegenüber einem mitbewegten Stützband (103) durchführt, und die Umlaufgeschwindigkeit des Schneidmessers über Rechnermittel (C2) gesteuert wird, wobei für jeden Schnitt das Messerwerk als einen Schneidzyklus, auf die Geschwindigkeit des Laminates beschleunigt, während dem Schnitt mit dem Laminat etwa mit gleicher Geschwindigkeit mitbewegt und danach auf eine tiefere Geschwindigkeit verzögert wird.

7. Verfahren nach Anspruch 6,
**dadurch gekennzeichnet,**
dass über Rechnermittel (C2) die Verarbeitungsgeschwindigkeit sowie die Bogenlänge frei eingebbar sind, und das Schneidmesser (10) aufgrund des effektiven Verarbeitungstempos und in Abhängigkeit der Bogenlänge (L) gesteuert/geregelt wird, wobei vorzugsweise die je momentane Verarbeitungsgeschwindigkeit über einen Hauptantrieb festgestellt und die übrigen Funktionen entsprechend koordiniert werden.

8. Verfahren nach einem der Ansprüche 1 bis 7,
**dadurch gekennzeichnet**,
dass zur Herstellung von UV-Laminaten die Folie (1) mit Einzelbogen (2) durch ein Kaschierwerk (7) zu einem Laminat (8) vereinigt und mit UV-Strahlen (12) fixiert wird, wobei Folie (1) und Bogen (2) auf eine gleiche Geschwindigkeit zum Kaschierwerk gebracht werden, und die Folie (1) schubkraftfrei, schwimmend mit geringer Presskraft und möglichst spannungsfrei auf den Bögen (2) aufgewalzt und das Laminat (8) vor der Strahlenfixierung nass geschnitten wird.

9. Vorrichtung zum Trennen eines kaschierten Laminates (8) bestehend aus einer bahnförmigen Folie (1) und Einzelbogen (2), wobei das Laminat (8) kontinuierlich an einer Schneidstation (9) mit Abstützung des Laminates vorbeigeführt wird und die Schneidstation (9) ein Schneidmesser (10) mit rotierender Bewegung aufweist
dadurch gekennzeichnet,
dass die unverarbeiteten Bogen (2) auf der einen Endseite einer Anlage gelagert, im wesentlichen horizontal über die Verfahrensstrasse zu der anderen Endseite der Anlage führbar sind und die Schneidstation (9) ein mit der Geschwindigkeit des Laminates (8) mitbewegbares Schneidmesser (10) und einen Umlaufregelantrieb für das Schneidmesser (10) aufweist, welches als thermisches Schneidmesser zum Nasstrennen der Folie (1) ausgebildet ist, wobei die Umlaufgeschwindigkeit des Schneidmessers (10) über Rechnermittel (C2) steuerbar ist, zur Beschleunigung des Schneidmessers (10) für jeden Schnitt auf die Geschwindigkeit des Laminates (8).

10. Vorrichtung nach Anspruch 9,
**dadurch gekennzeichnet,**
dass in einem oberen Bereich der Bewegung des Schneidmessers (10) ein O-Positions-Sensor angeordnet ist, zur Definierung eines 0-Punktes.

11. Vorrichtung nach Anspruch 9 oder 10,
**dadurch gekennzeichnet,**
dass die Umlaufgeschwindigkeit des Schneidmessers (10) über Rechnermittel (C2) steuerbar ist, derart, dass für jeden Schnitt das Messerwerk als einen Schneidzyklus, auf die Geschwindigkeit des Laminates beschleunigt, während dem Schnitt mit dem Laminat etwa mit gleicher Geschwindigkeit mitbewegt und danach auf eine tiefere Geschwindigkeit verzögert wird.

12. Vorrichtung nach Anspruch 11,
**dadurch gekennzeichnet,**
dass der 0-Punkt bzw. Eichpunkt in dem Bereich der tieferen Geschwindigkeit angeordnet und als Ausgangspunkt für die Errechnung des nächsten Zyklus verwendbar ist, wobei jeder Schneidzyklus einer vollen Umdrehung des Messerwerkes entspricht und die 0-Position örtlich im oberen Bewegungsviertel des Drehkreises (101) gewählt wird.

13. Vorrichtung nach einem der Ansprüche 9 bis 12,
**dadurch gekennzeichnet,**
dass unter dem kreisenden Messerwerk eine mit dem Laminat (8) mit gleicher Geschwindigkeit mitbewegbares Stütz- bzw. Saugband (103) angeordnet ist.

14. Vorrichtung nach Anspruch 13,
**dadurch gekennzeichnet,**
dass unterhalb dem Stützband (103) Auflagestellen angeordnet sind, derart, dass die effektive Schneidbahn bzw. Kreislinie (101) um ein geringes Mass tiefer ist, gegenüber der ungestörten Bewegungsbahn des Laminates (8), so dass das Schneidmesser (10) das Laminat entsprechend nach unten drückt, wobei nicht nur die Wärmeeinwirkung sondern gleichzeitig auch eine geringe mechanische Schneidkraft wirkt.

15. Vorrichtung nach einem der Ansprüche 9 bis 14,
**dadurch gekennzeichnet**,
dass zur Herstellung von UV-Laminaten bestehend aus einer dünnen Folie sowie Einzelbogen welche ein Kaschierwerk (15) mit Folienwalze (19) und Bogenwalze (20), eine Schneidstation (9) sowie eine UV-Härtung (12), ferner eine Bogen- und Folienzuführung aufweist, wobei der Bogen- und Folienzuführung Steuermittel zugeordnet sind zur Zuführung von Folie und Bogen mit der gleichen Geschwindigkeit wie die Kaschiergeschwindigkeit, und dass sowohl die Folienwalze (19) wie die Bogenwalze (20) Antriebsmittel mit einer zugeordneten Regeleinrichtung aufweisen, so dass die Folie (1) schubkraftfrei, schwimmend mit geringer Presskraft und möglichst spannungsfrei auf den Bogen aufwalzbar und der Schneidstation überführbar ist.

16. Vorrichtung nach einem der Ansprüche 9 bis 15,
**dadurch gekennzeichnet,**
dass das Schneidmesser (10) einen elektrischen Draht oder einen feinen Metallstreifen aufweist, welcher durch elektrischen Widerstand aufheizbar ist.

## Claims

1. Process for separating a laminated product (8) composed of a web-formed film (1) and single sheet (2, 2', 2"), wherein the laminate is continuously passed to a cutting station (9) and is supported for the film cut and a cutting knife (10) moves with rotating movement on the laminate towards and away from the movement path of the laminate (8) and is guided for the cut with the laminate (8) at approximately the same speed and only the film is cut through, characterised by the features:
a) the unprocessed sheets (2) are mounted on one end face of an installation, guided substantially horizontally over the process path to the other end face of the installation
b) wherein the film is wet separated and the film separation takes place as a result of the heat effect of a thermal cutting knife (10) and
c) the rotational speed of the cutting knife (10) is controlled by a computer and for each cut the knife unit is accelerated to the speed of the laminate (8) as a cutting cycle.

2. Process according to claim 1, characterised in that the speed progression of the cutting knife (10) is controlled in particular for the cut in accordance with the installation speed and in accordance with the sheet length (L).

3. Process according to claim 1 or 2, characterised in that the effective cutting path or circular line (101) of the cutting knife (10) is deeper by a small amount compared with the uninterrupted movement path of the laminate (8) and the laminate (8) is correspondingly pushed into the movement path during the cut and the film separation takes place as a result of the heat effect and a low mechanical cutting force.

4. Process according to one of claims 1 to 3, characterised in that a support web (103) for the laminate (8) is arranged below the knife unit, which travels with the laminate (8) at approximately the same speed.

5. Process according to one of claims 1 to 4, characterised in that the film (1) is wet cut prior to the securing of a laminate and the laminate portions (16) are separated.

6. Process according to one of claims 1 to 5, characterised in that the cutting knife (10) executes a rotating movement with respect to a support web (103) which travels with it for the cut and the rotational speed of the cutting knife is controlled by a computer (C2), wherein for each cut the knife unit is accelerated to the speed of the laminate as a cutting cycle whilst the cut moves with the laminate at approximately the same speed and is thereafter decelerated to a lower speed.

7. Process according to claim 6, characterised in that the processing speed and the sheet lengths are freely inputtable via the computer (C2) and the cutting knife (10) is controlled/regulated as a result of the effective processing tempo and as a function of the sheet length (L), wherein the current processing speed is preferably determined by a main drive and the remaining functions are coordinated accordingly.

8. Process according to one of claims 1 to 7, characterised in that for producing UV-laminates the film (1) with single sheets (2) is united by a laminating unit (7) to a laminate (8) and is fixed by UV-radiation (12), wherein the film (1) and sheets (2) are brought to the laminating unit at the same speed and the film (1) is laminated without shearing forces in a floating manner with a low force of pressure and in as stress free a manner as possible onto the sheets (2) and the laminate (8) is wet cut prior to the radiation fixing.

9. Device for separating a laminated product (8) composed of a web-formed film (1) and single sheet (2), wherein the laminate (8) is continuously passed to a cutting station (9) with support of the laminate, and the cutting station (9) has a cutting knife (10) with rotating movement, characterised in that the unprocessed sheets (2) are mounted on one end face of an installation, are substantially conveyable horizontally over the process path to the other end face of the installation and the cutting station (9) has a cutting knife (10) which can travel at the speed of the laminate (8) and a rotation control drive for the cutting knife (10) which is designed as a thermal cutting knife for the wet separation of the film (1), wherein the rotational speed of the cutting knife (10) is controllable by a computer (C2) for the acceleration of the cutting knife (10) to the speed of the laminate (8) for each cut.

10. Device according to claim 9, characterised in that in an upper region of the movement of the cutting knife (10) a zero position sensor is arranged for defining a zero point.

11. Device according to claim 9 or 10, characterised in that the rotational speed of the cutting knife (10) is controllable by a computer (C2) in such a way that for each cut the knife unit is accelerated to the speed of the laminate as a cutting cycle, whilst the cut travels with the laminate at approximately the same speed and is thereafter decelerated to a lower speed.

12. Device according to claim 11, characterised in that the zero point or calibration point is arranged in the region of the lower speed and can be used as the starting point for the calculation of the next cycle, wherein each cutting cycle corresponds to a complete rotation of the knife unit and the zero position is selected locally in the upper movement quarter of the turning circle (101).

13. Device according to one of claims 9 to 12, characterised in that a support or suction web (103) is arranged below the rotating knife unit, which can be moved with the laminate (8) at the same speed.

14. Device according to claim 13, characterised in that support points are arranged below the support web (103) in such a way that the effective cutting path or circular line (101) is deeper by a small amount compared with the uninterrupted movement path of the laminate (8) so the cutting knife (10) accordingly pushes the laminate downwards, wherein not only the heat effect is effective but also at the same time a low mechanical cutting force.

15. Device according to one of claims 9 to 14, characterised in that for the production of UV-laminates composed of a thin film and single sheets which has a laminating unit (15) with film roll (19) and sheet roll (20), a cutting station (9) and a UV-curing (12), furthermore a sheet and film supply, wherein the sheet and film supply are associated with control means for the supplying of films and sheets at the same speed as the laminating speed and in that both the film roll (19) and the sheet roll (20) have drive means with an associated control device so the film (1) is capable of being rolled on the sheet without shearing forces, in a floating manner with low moulding pressure and in as stress free a manner as possible and is capable of being conveyed to the cutting station.

16. Device according to one of claims 9 to 15, characterised in that the cutting knife (10) has an electrical wire or a fine metal strip which is heatable by electric resistance.

## Revendications

1. Procédé de division en parties élémentaires d'un produit doublé (8) contrecollé, constitué d'une feuille continue (1), en forme de nappe, et de feuilles individuelles (2, 2', 2"), le produit doublé étant envoyé d'une manière continue de façon à passer devant un poste de coupe (9) et étant placé en appui pour la coupe de la feuille continue, tandis qu'une lame de coupe (10) à mouvement rotatif est déplacée sur le produit doublé en se rapprochant et s'éloignant de la trajectoire de mouvement du produit doublé (8) et, pour la coupe, est guidée avec le produit doublé (8), à approximativement la même vitesse, et que seule la feuille continue est coupée à travers la masse,
caractérisé par les particularités :
a) les feuilles individuelles (2) non traitées sont posées sur un premier côté d'extrémité d'une installation, et sont guidées d'une manière essentiellement horizontale, sur l'étendue de la voie du processus, jusqu'à l'autre côté d'extrémité de l'installation,
b) la feuille continue étant divisée en parties élémentaires à l'état humide et la division en parties élémentaires ayant lieu sous l'effet d'une action thermique d'une lame de coupe thermique (10) et
c) la vitesse de rotation de la lame de coupe (10) est commandée par des moyens de calcul et, pour chaque coupe, l'appareil est, en constituant un cycle de coupe, accéléré jusqu'à la vitesse du produit doublé (8).

2. Procédé suivant la revendication 1, caractérisé en ce que la variation dans le temps de la vitesse de la lame de coupe (10) est, notamment pour la coupe, commandée d'une manière correspondant à la vitesse de l'installation et en concordance avec la longueur (L) des feuilles individuelles.

3. Procédé suivant la revendication 1 ou 2, caractérisé en ce que la trajectoire de coupe effective ou ligne circulaire (101) de la lame de coupe (10) est plus basse, d'une faible valeur, que la trajectoire de mouvement non perturbée du produit doublé (8), et, pendant la coupe, le produit doublé (8) est repoussé sous pression d'une manière correspondante dans la trajectoire de mouvement et la séparation de la feuille continue en parties élémentaires a lieu sous l'effet de l'action de la chaleur et d'une faible force de coupe mécanique.

4. Procédé suivant l'une des revendications 1 à 3, caractérisé en ce qu'il est prévu, disposée au-dessous de l'appareil à lame, une bande d'appui (103) pour le produit doublé (8) qui est entraînée avec le produit doublé (8), approximativement à la même vitesse.

5. Procédé suivant l'une des revendications 1 à 4, caractérisé en ce que la feuille continue (1) est coupée à l'état humide, avant un durcissement du produit doublé, et les sections de produit doublé (16) sont divisées en parties élémentaires.

6. Procédé suivant l'une des revendications 1 à 5, caractérisé en ce que la lame de coupe (10) exécute, pour la coupe, un mouvement rotatif vis-à-vis d'une bande d'appui (103) entraînée en même temps, et la vitesse de rotation de la lame de coupe est commandée par des moyens de coupe (C2), l'appareil à lame étant, pour chaque coupe, en constituant un cycle de coupe, accéléré à la vitesse du produit doublé, entraîné avec le produit doublé pendant la coupe, approximativement à la même vitesse, puis ralenti jusqu'à une vitesse plus basse.

7. Procédé suivant la revendication 6, caractérisé en ce que la vitesse de traitement et la longueur des feuilles individuelles peuvent être introduites librement à l'aide de moyens de calcul (C2) et la lame de coupe (10) est soumise à une commande/régulation sur la base de la cadence de traitement effective et en fonction de la longueur (L) des feuilles individuelles, tandis que, de préférence, la vitesse de traitement chaque fois instantanée est déterminée par l'intermédiaire d'un entraînement principal et les autres fonctions font l'objet d'une coordination correspondante.

8. Procédé suivant l'une des revendications 1 à 7, caractérisé en ce que, pour la réalisation de produits doublés UV, la feuille continue (1) est réunie à des feuilles individuelles (2) au moyen d'un appareil de contrecollage (7) de façon à former un produit doublé (8) et est fixée au moyen de rayons UV (12), une feuille continue (1) et des feuilles individuelles (2) étant amenées à une même vitesse à l'appareil de contrecollage et la feuille continue (1) étant appliquée d'une façon superposée sur les feuilles individuelles (2) d'une manière dépourvue de force de poussée, d'une manière flottante à faible force de pression et d'une manière la plus dépourvue possible de contraintes et le produit doublé (8) étant coupé à l'état humide avant la fixation par rayons.

9. Dispositif de division en parties élémentaires d'un produit doublé (8) contrecollé, constitué d'une feuille continue (1), en forme de nappe, et de feuilles individuelles (2), le produit doublé étant envoyé d'une manière continue de façon à passer devant un poste de coupe (9), avec un appui du produit doublé, et le poste de coupe (9) comporte une lame de coupe (10) à mouvement rotatif,
caractérisé en ce que les feuilles individuelles (2) non traitées sont posées sur un premier côté d'extrémité d'une installation, et peuvent être guidées d'une manière essentiellement horizontale, sur l'étendue de la voie du processus, jusqu'à l'autre côté d'extrémité de l'installation, et le poste de coupe comporte une lame de coupe, pouvant être déplacée avec le produit doublé, à la vitesse de celui-ci, et un entraînement de régulation de rotation pour la lame de coupe (10), qui est réalisé sous forme d'une lame de coupe thermique, notamment pour la division en parties élémentaires de la feuille continue (1) à l'état humide, la vitesse de rotation de la lame de coupe (10) peut être commandée par des moyens de calcul (C2), pour l'accélération de la lame de coupe (10), pour chaque coupe, jusqu'à la vitesse du produit doublé (8).

10. Dispositif suivant la revendication 9, caractérisé en ce qu'un détecteur de position 0 est disposé dans une zone de supérieure du mouvement de la lame de coupe (10), en vue de définir un point 0.

11. Dispositif suivant la revendication 9 ou 10, caractérisé en ce que la vitesse de rotation de la lame de coupe (10) peut être commandée par des moyens de calcul (C2), d'une manière telle que, pour chaque coupe, l'appareil à lame est, constituant un cycle de coupe, accéléré jusqu'à la vitesse du produit doublé, entraîné en même temps que le produit doublé pendant la coupe, approximativement à la même vitesse, puis ralenti jusqu'à une vitesse plus basse.

12. Dispositif suivant la revendication 11, caractérisé en ce que le point 0 ou point de référence est situé dans la zone de la vitesse plus basse et est utilisable comme point initial pour le calcul du cycle suivant, chaque cycle de coupe correspondant à une rotation complète de la lame de coupe et la position 0 étant choisie en ce qui y concerne la localisation dans le quart supérieur de mouvement du cercle de rotation (101).

13. Dispositif suivant l'une des revendications 9 à 12, caractérisé en ce qu'il est prévu, disposée sous l'appareil à lame rotatif, une bande d'appui ou bande aspirante (103) pouvant être déplacée avec le produit doublé (8) à la même vitesse.

14. Dispositif suivant la revendication 13, caractérisé en ce que des emplacements de support sont disposés au-dessous de la bande d'appui (103), d'une manière telle que la trajectoire de coupe effective ou ligne circulaire (101) est plus basse, d'une faible valeur, que la trajectoire de mouvement non perturbée du produit doublé (8), de sorte que la lame de coupe (10) repousse sous pression le produit doublé vers le bas d'une manière correspondante, tandis que c'est non seulement l'action de la chaleur, mais également en même temps une faible force de coupe mécanique qui agissent.

15. Dispositif suivant l'une des revendications 9 à 14, caractérisé en ce que, pour la réalisation de produits doublés UV constitués d'une feuille continue mince et de feuilles individuelles, qui comprend un appareil de contrecollage (15) comportant un cylindre de feuille continue (19) et un cylindre de feuilles individuelles (20), un poste de coupe (9) et un durcissement UV (12), en outre un acheminement de feuilles individuelles et de feuille continue, des moyens de commande étant associés à l'acheminement de feuilles individuelles et de feuille continue pour acheminer une feuille continue et des feuilles individuelles à la même vitesse que la vitesse de contrecollage, et en ce qu'aussi bien le cylindre de feuille continue (19) que le cylindre de feuilles individuelles (20) comportent des moyens d'entraînement auxquels est associé un dispositif de régulation, de sorte que la feuille continue (1) peut être superposée aux feuilles individuelles d'une manière dépourvue de force de poussée, d'une manière flottante à faible force de pression et d'une manière la plus dépourvue possible de contraintes et peut être transférée au poste de coupe.

16. Dispositif suivant l'une des revendications 9 à 15, caractérisé en ce que la lame de coupe (10) comporte un fil électrique ou une fine bande métallique qui peut être chauffée au moyen d'une résistance électrique.
